# EUROPEAN PATENT APPLICATION

(11) **EP 2 698 887 A1**
(43) Date of publication of application: **19.02.2014**
(21) Application number: 12770524.2
(22) Date of filing: 10.02.2012
(51) Int. Cl.: H02G 3/08, H01R 13/02, H01L 31/048

(54) **JUNCTION BOX WITH CABLE CONNECTOR**

(30) Priority: 14.04.2011 CN 201110105817
(71) Applicant: Yueqing Xindali Industries Co., Ltd., Zhejiang 325604 (CN); EME Ltd., 8123 Ebmatingen (CH)
(72) Inventor: LIU, Yuzhu, Zhejiang 325604 (CN); KRUESI, Peter, CH-8123 Ebmatingen (CH)
(74) Representative: Groth & Co. KB
(86) International application number: PCT/CN2012/000161
(87) International publication number: WO 2012/139410

(57) **Abstract**

A junction box with cable connectors comprises a junction box body (2) and male and female cables (1a, 1b), the junction box body comprising a junction box casing, conductive boards (21a, 21b), a first coupler (22) and a second coupler (23), wherein the junction box casing comprises a bottom housing (24) and an enveloping plate (25); the bottom housing comprises a base plate (241) and a side wall (242) which extends perpendicular to the base plate and is adapted to the peripheral shape of the enveloping plate; and the side wall and the enveloping plate define an internal space, wherein the side wall is provided with coupling holes (243, 244) which are symmetrical with respect to a longitudinal central line (4) and extend outward perpendicular to the side wall; the first coupler and the second coupler are arranged on the coupling holes of the side wall by coupling with the coupling holes, respectively; the conductive boards are arranged inside the internal space, and are connected with one ends of the cables passing through the first coupler and the second coupler, respectively; the base plate is provided with an opening (245); and the conductive boards are distributed at both sides of the opening. The junction box has the characteristics of being reasonable in structure, convenient, practical and the like.

## Description

### Field of the Invention

The present invention relates to a junction device, in particular to a junction box with cable connectors suitable to be attached to a solar panel.

### Background of the Invention

Currently, various junction boxes with cable connectors are available in the market, and most of them are used in outdoor environment in which wind and rain often occur and cold and hot weathers alternate, so the actual situation determines that the requirements on various performances of the junction boxes with cable connectors, such as strength and structural sealability, are very high, and it is a common phenomenon that the junction boxes with cable connectors actually used in the market are low in dissipating efficiency and complicated in structure, thereby often resulting in the defects of short service life, complicated cable connection and the like; and thus it is clear that for optimizing the existing junction boxes with cable connectors, it is necessary to develop, according to the specific requirements of customers, a junction box with cable connectors which is novel in design and reasonable in structure and suitable to be attached to the solar panel.

### Summary of the Invention

The object of the present invention is to overcome the defects of the prior art, and provide a junction box with cable connectors which has a novel design, a reasonable structure, and a relatively long service life.

To achieve the above object, the present invention adopts a junction box with cable connectors, comprising a junction box body and male and female cables, the junction box body comprising a junction box casing, conductive boards, a first coupler and a second coupler, wherein the junction box casing comprises a bottom housing and an enveloping plate; the bottom housing comprises a base plate and a side wall which extends perpendicular to the base plate and is adapted to the peripheral shape of the enveloping plate; and the side wall and the enveloping plate define an internal space, wherein the side wall is provided with coupling holes which are symmetrical with respect to a longitudinal central line and extend outward perpendicular to the side wall; the first coupler and the second coupler are arranged on the coupling holes of the side wall by coupling with the coupling holes, respectively; the conductive boards are arranged inside the internal space, and are jointed with one ends of the male cable and the female cable passing through the first coupler and the second coupler, respectively; a diode is connected between the conductive boards; the base plate is provided with an opening; and the conductive boards are distributed at both sides of the opening. Through the above improvement on the prior art, the junction box with cable connectors only comprises the cables and the junction box body, and the junction box body only comprises the necessary junction box casing, conductive boards and first and second couplers, and especially with respect to the junction box casing, with a simplified design, it only comprises the bottom housing and the enveloping plate, and the side wall of the bottom casing is provided with the coupling holes for mounting the first coupler and the second coupler, thus simplifying, to the maximal degree, the design with complicated structures, such as reinforcing ribs and wiring terminals, in the existing junction box; moreover, the base plate is also provided with the opening, and the conductive boards are arranged at both sides of the opening, thereby optimizing the radiating performance of the junction box with cable connectors; and especially in delivery, after procedures of testing whether the conductive boards connected by the diode are good in conductivity, and the like, and after a filling material, such as silica gel, a potting agent, or foam, which needs to be injected in liquid state and is hardened after injection, is injected into the internal space of the junction box by the customer, it facilitates introducing and connecting an external connecting attachment of the solar panel through the opening of the base plate, thus being convenient and practical, and achieving optimal radiating effect.

Preferably, the two coupling holes are provided, at the outer circumferential surfaces, with external threads which spin in opposite directions relative to each other; and the first coupler and the second coupler couple with the coupling holes by internal threads provided thereon, respectively.

Through further defining by the above preferable way, as the external threads of the two coupling holes are in opposition directions, after the cables are jointed to the conductive boards, the first coupler and the second coupler are screwed in opposite directions, thus avoiding the phenomenon in the case of the same screwing direction that as one coupler is screwed too tight, a conductive board at the other coupler is loosened or even jumps up, thereby improving the reliability and stability of the junction box with cable connectors.

Preferably, an α forming angle is formed between axial central lines of the coupling holes, the α forming angle being preferably between 75 ° and 125° , and the side wall is divided into an outer side wall and an inner side wall by the axial central lines forming the α angle; the bottom surface of the base plate is a flat surface with a sector structure, and the flat surface is provided with a plurality of pivots along its edge; of course, it's a better preferable way that the flat surface is also provided with a region having a double sided adhesive, and the double sided adhesive region can be a concave region with respect to the flat surface as a reference, or can be a region as a certain part of the flat surface; the base plate is provided with an extending part within the angle range of the α forming angle, at a section projecting from the inner side wall, and with reinforcing ribs extending from the side wall partially along the periphery of the extending part; the upper end face of the extending part forms a region for laser printing an unique product number or other product information; and the outer side surface of the outer side wall is connected outward with two cable receiving troughs having an inner diameter adapted to the outer diameter of the cable, and the cable receiving troughs are symmetrical with respect to the longitudinal central line.

According to the structure of the junction box body of the junction box with cable connectors further defined by the above preferable way, especially the cable receiving troughs symmetrical with respect to the longitudinal central line are provided on the outer side surface of the outer side wall of the junction box body in a manner of extending outwards, as the inner diameter of the cable receiving troughs is adapted to the outer diameter of cables in size, when the junction box with cable connectors is provided to the customer, the male and female cables are received in the cable receiving troughs, respectively, so that the cables will not sway casually and are placed in a normalized and ordered manner suitable for packaging, not resulting in complicated packaging due to disordered winding of the cables; in addition, as the bottom surface of the base plate is configured with a flat sector structure, and the shape is especially suitable for achieving the effect that after the adhesive is sprayed around the opening of the base plate through a robot by the customer, when the junction box is screwed and pressed on the solar panel or other plate walls, adhesive liquid on the base plate of the junction box with cable connectors is perfectly distributed on the base plate, and is thereby fully used and not prone to fall off, thus further improving the reliability and stability, and relatively prolonging the service life.

Preferably, the bottom surface of the enveloping plate is provided with a plurality of clamping blocks projecting downward, at positions close to the peripheral side, and the part of each clamping block projecting from the peripheral edge of the enveloping plate forms a clamping part; and the upper end face of the side wall is provided with a stepped groove adapted to the enveloping plate, and the stepped groove includes a stepped bottom surface and a stepped side surface, the stepped bottom surface being provided with notches adapted to the clamping blocks, and the notches extending to the stepped side surface and forming clamping groove parts on the stepped side surface, so that the clamping parts of the clamping blocks can come into clamped connection with the clamping groove parts of the notches. In the preferable way, as clamping grooves on the side wall are formed inside, clamped connection between the enveloping plate and the bottom housing is achieved without affecting the appearance, and the junction box can not be opened after assembly; and after a filling material is injected, the sealing performance of the junction box is also relatively good. Of course, in practical use, it is also completely possible for the clamping blocks to be provided on the outer side surface of the side wall and for the clamping grooves to be formed on the enveloping plate in a manner of extending perpendicular to the enveloping plate, thereby achieving clamped connection; however, in such a connecting way, as the enveloping plate needs to be provided with clamping grooves, the structure of the enveloping plate is relatively complicated, and the mounting sealability of the enveloping plate and the casing is relatively poor after the filling material is injected. Further preferably, the upper end face of the enveloping plate is provided with a nameplate region and a sucker region which are distributed longitudinally and are symmetrical with respect to the longitudinal central line, wherein the nameplate region is located at an upper place on the upper end face of the enveloping plate, and the sucker region is located below the nameplate region on the upper end face of the enveloping plate; and the dimension of the nameplate region is preferably 7. 8mm × 28. 2mm, and the dimension of the sucker region is preferably 10mm × 30mm. The reason for such further defining is that the enveloping plate and a junction box body of the junction box with cable connectors provided to the customer are separated from each other, and need to be assembled after the junction box with cable connectors is tested by the customer, and in the case of the enveloping plate being provided with the sucker region, the customer can more visually and conveniently use an mechanical arm for positioning and installation, thereby improving the efficiency; and the dimension of the sucker region of 10mm × 30mm is especially suitable for positioning by the mechanical arm and is also a special size for absorption by the mechanical arm, and of course, a series of improvement can also be made on the sucker region for adapting to other mechanical arms, for example, the sucker is configured with any common geometrical shape, such as being circular, elliptical or the like.

Preferably, the conductive boards are provided with coupling portions and fixed portions, wherein the coupling portions are arranged at positions in the internal space close to the coupling holes, and the coupling portions are each provided with a cable clamping hole and a cable core clamping hole which are distributed axially; the fixed portions are each provided with at least two through holes, and the through holes are adapted to and located relative to projections formed on the base plate; the conductive boards are provided with hanging portions bent upward at 90° , at positions far from the coupling portions and corresponding to pins led from both ends of the diode, and the hanging portions are each provided with an arc-shaped transverse groove, and the arc-shaped transverse groove is provided with a position limiting through hole at the end far from the longitudinal central line; each pin is provided at the end with a bent part, and the pin is adapted to the arc-shaped transverse groove and longitudinally limits the position of the diode in such a way that the bent part at the end of the pin is adapted to the position limiting through hole; and each fixed portion is provided with a conductivity testing region with an area not smaller than 10mm × 6mm, at a position close to the hanging portion.

From the further defining of the conductive boards in the internal space by the above preferable way, it can be obviously seen that after the conductive boards are put into the internal space of the junction box by the customer in such a manner that the through holes are adapted to and located relative to the projections, the junction box is erected; then the diode is placed between the two conductive boards in such a manner that the pins are adapted to the arc-shaped transverse grooves between the two conductive boards; and the bent parts at the ends of the pins are adapted to the position limiting through holes on the hanging portions, thereby limiting the position of the diode; and then the pins and the hanging portions are spot welded by the customer, thereby fixedly connecting the diode with the conductive boards; in addition, the conductivity testing regions, the area of which is preferably 10mm × 6mm, provided at the positions close to the hanging portions are especially suitable for testing by an mechanical arm.

Further preferably, the conductive boards are provided with side through slots at the sides adjacent to the inner side wall, and the side through slots are adapted to position limiting blocks on the side wall to achieve position limitation; the conductive boards are provided with downward bent convex edges at the sides close to the opening of the base plate, and arc transitions are formed between the convex edges and the upper end faces of the conductive boards; at the periphery of the opening of the base plate, are provided position limiting grooves adapted to the convex edges; at positions on the upper end faces of the fixed portions of the conductive boards that are close to the convex edges, are provided spot welding regions with an area not smaller than 10mm × 6mm; and the reason why the position limiting grooves adapted to the convex edges are provided at the periphery of the opening is that not only can the conductive boards be further defined so that the conductive boards are positioned in the internal space more securely, but also additionally, due to the arc transitions between the convex edges and the upper end faces of the fixed portions of the conductive boards, it achieves, to some extent, the effect of less probability of hurting hands, causing flaws on the product and the like.

Preferably, the internal space of the junction box is filled with an insulating filling material, such as a potting agent, e.g. silica gel, or foam. Preferably, it is a potting agent, which can effectively improve the insulating, anti-corrosive and heat-resistant performances of the junction box with cable connectors.

### Detailed Description of the Drawings

Fig. 1 is a stereoscopic schematic view of an embodiment of the present invention.
Fig. 2 is a stereoscopic schematic view of a junction box in Fig. 1.
Fig. 3 is a stereoscopic exploded schematic view of the junction box in Fig. 2.
Fig. 4 is a stereoscopic schematic view of a bottom housing in the embodiment of the present invention.
Fig. 5 is a front view of the bottom housing in the embodiment of the present invention.
Fig. 6 is a stereoscopic schematic view of an enveloping plate in the embodiment of the present invention.
Fig. 7 is a bottom view of the enveloping plate in the embodiment of the present invention.
Fig. 8 is a stereoscopic schematic view of Fig. 2 with the enveloping plate removed.
Fig. 9 is a stereoscopic schematic view of a conductive board in the embodiment of the present invention.
Fig. 10 is an enlarged view at A of Fig. 4.
Fig. 11 is a stereoscopic schematic view from another perspective of the bottom housing in the embodiment of the present invention.

### Detailed Description of the Embodiments

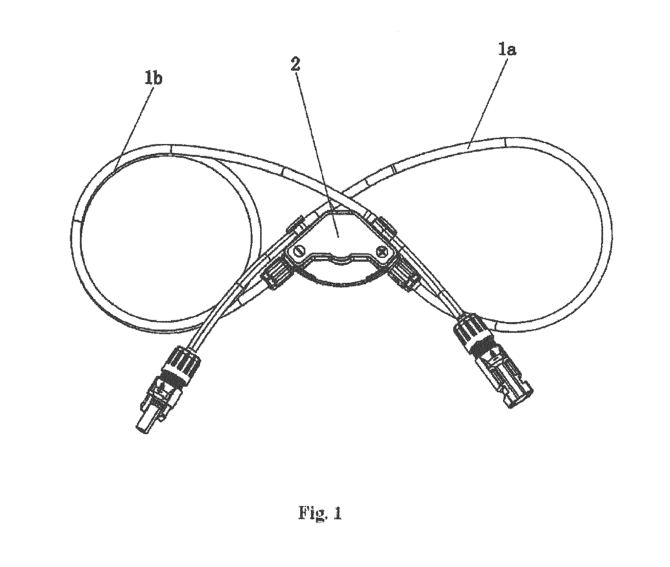

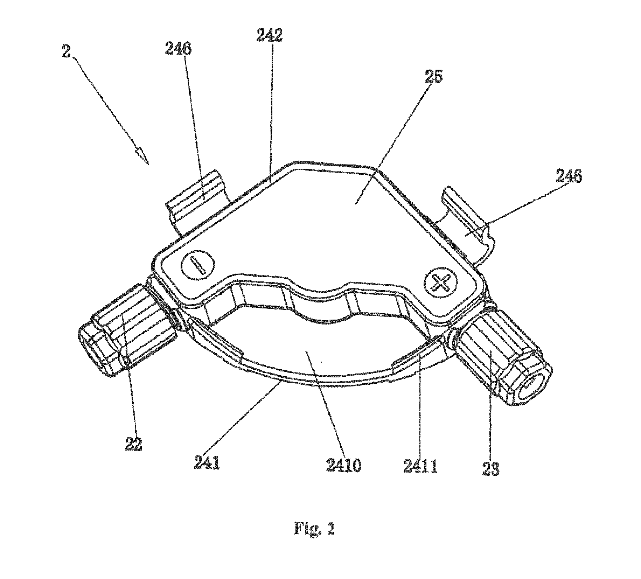

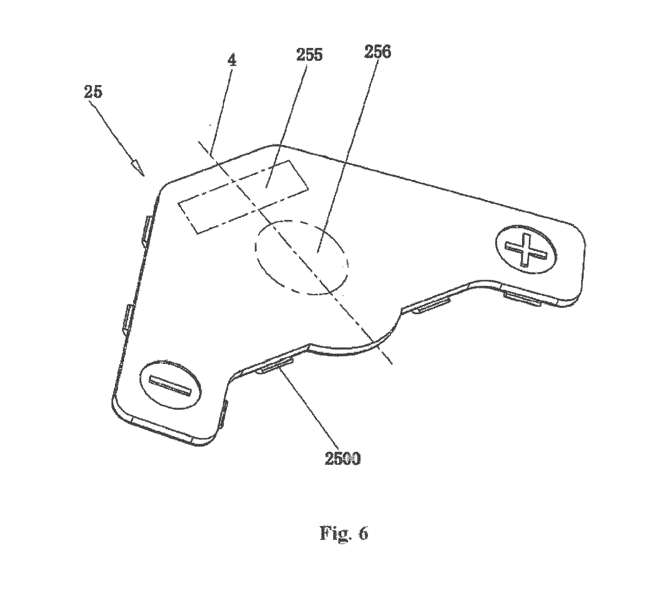

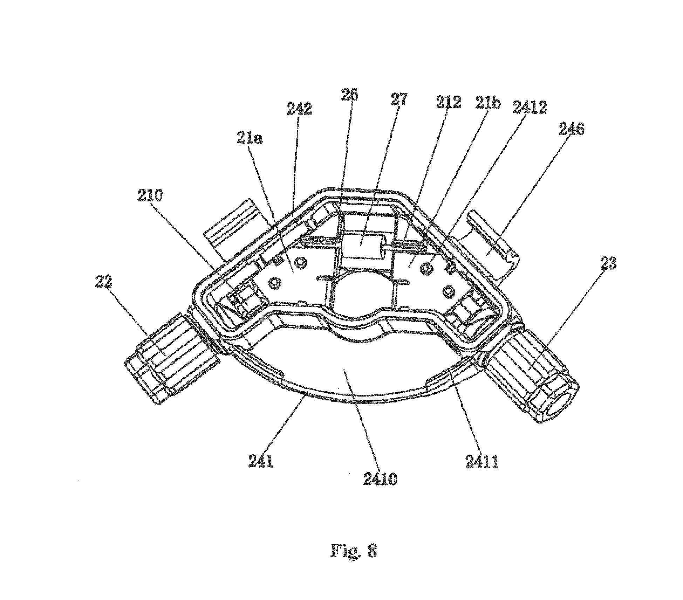

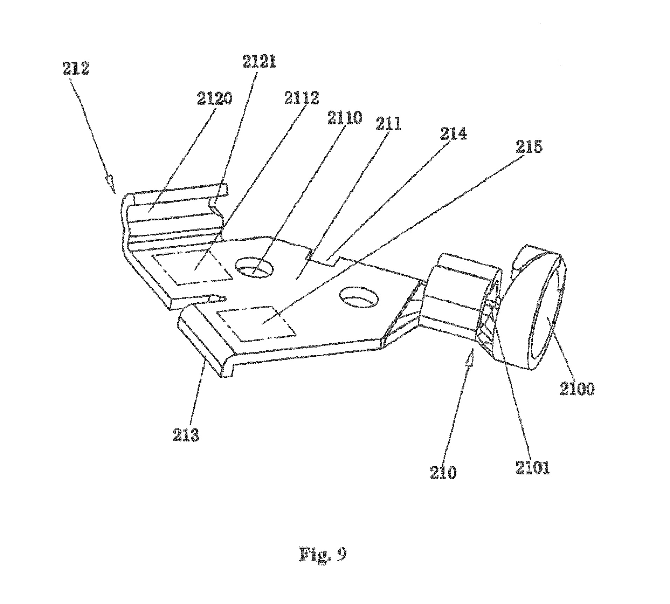

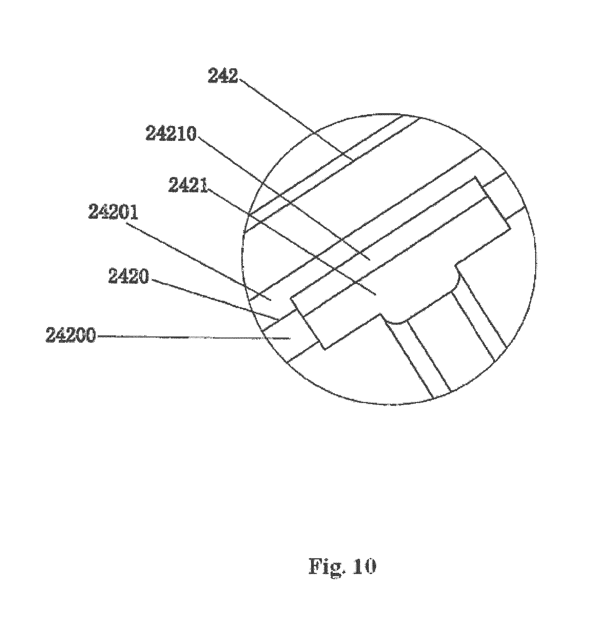

As shown in Figs. 1-11, a particular embodiment of the present invention relates to a junction box with cable connectors, comprising a junction box body 2 and cables 1, the junction box body 2 comprising a junction box casing, conductive boards 21a, 21b, a first coupler 22 and a second coupler 23, wherein the junction box casing comprises a bottom housing 24 and an enveloping plate 25; the bottom housing 24 comprises a base plate 241 and a side wall 242 which extends perpendicular to the base plate 241 and is adapted to the peripheral shape of the enveloping plate 25; and the side wall 242 and the enveloping plate 25 define an internal space, wherein the side wall 242 is provided with coupling holes 243, 244 which are symmetrical with respect to a longitudinal central line 4 and extend outward perpendicular to the side wall 242; the coupling holes 243, 244 are provided, at the outer circumferential surfaces, with external threads which spin in opposite directions relative to each other, and the first coupler 22 and the second coupler 23 couple with the coupling holes 243, 244 by internal threads provided thereon, respectively; the conductive boards 21a, 21b are arranged inside the internal space, respectively, and are jointed with one ends of the male cable 1a and the female cable 1b passing through the first coupler 22 and the second coupler 23, respectively; the conductive boards 21a, 21b are connected by a diode 27; the base plate 241 is provided with an opening 245; and the conductive boards 21 a, 21b are distributed at both sides of the opening 245, respectively. In the embodiment, with the above simplified design, the junction box casing only comprises the bottom housing 24 and the enveloping plate 25, and the side wall 242 of the bottom casing 24 is provided with the coupling holes 243, 244 for mounting the first coupler 22 and the second coupler 23, thus simplifying, to the maximal degree, the design with complicated structures, such as reinforcing ribs and wiring terminals, in the existing junction box; moreover, the base plate is also provided with the opening 245, and the conductive boards 21a, 21b are arranged at both sides of the opening 245, thereby optimizing the radiating performance of the junction box with cable connectors; and especially in delivery, after procedures of testing whether the conductive boards 21a, 21b connected by the diode 27 are good in conductivity, and the like, and after a filling material, such as silica gel, a potting agent, or foam, which needs to be injected in liquid state and is hardened after injection, is injected into the internal space of the junction box 2 by a customer, it facilitates connecting the conductive boards 21a, 21b by an aluminum foil and leading out of the opening 245 of the base plate 241, thus achieving optimal radiating effect.

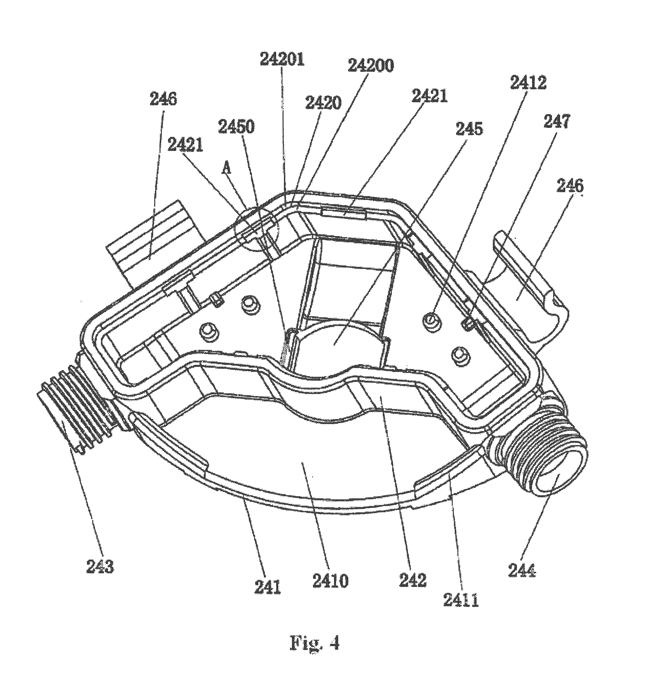

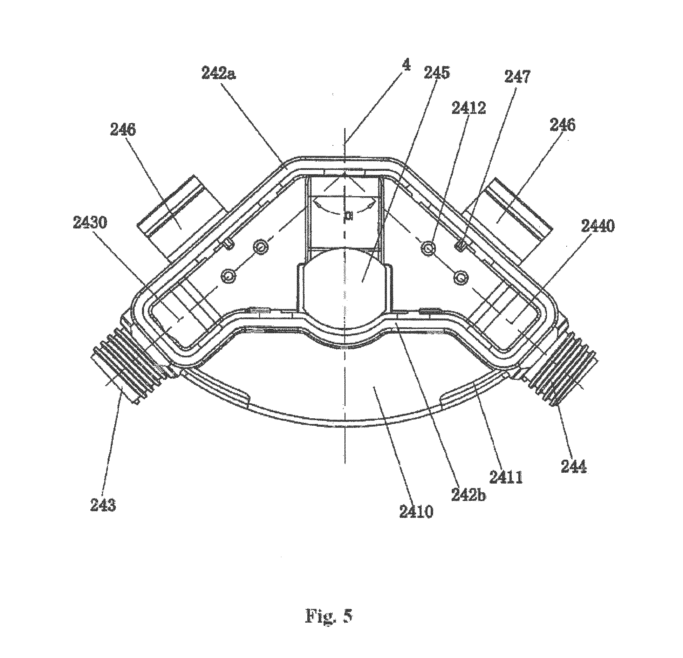

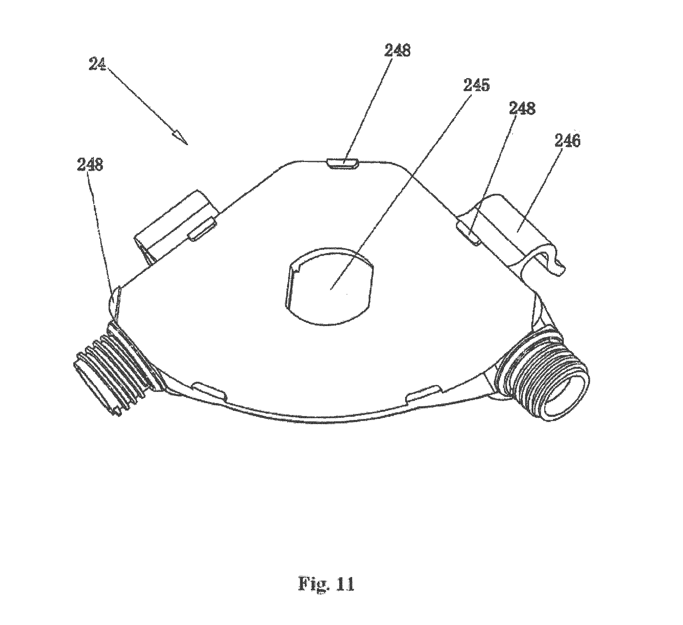

It can be seen obviously in conjunction with Figs. 4 and 5, an α forming angle is formed between axial central lines 2430, 2440 of the coupling holes 243, 244, the α forming angle being preferably between 75 ° and 125° , and the side wall is divided into an outer side wall 242a and an inner side wall 242b by the axial central lines forming the α angle; the bottom surface of the base plate 241 is a flat surface with a sector structure, and it can be seen from Fig. 11 the flat surface is provided, along its edge, with a plurality of pivots 248, which pivots 248 are used for controlling the spatial distance between the bottom of the product and the solar panel, and of course, it's a better preferable way that the flat surface is also provided with a region having a double sided adhesive, and the double sided adhesive region can be a concave region with respect to the flat surface as a reference, or can be a region as a certain part of the flat surface, and in the figures of the embodiment, the double sided adhesive region preferably has an area of 8mm × 12mm, which is not marked in the figures, and the double sided adhesive region is provided due to the fact that the junction box is fixed to the solar panel by silica gel, and in order to ensure that the junction box is secured before the silica gel on the bottom of the junction box becomes dry, the double sided adhesive provided in the double sided adhesive region plays the securing function before the silica gel is dry; the base plate 241 is provided with an extending part 2410 within the angle range of the α forming angle, at a section projecting from the inner side wall 242b, and with reinforcing ribs 2411 extending from the side wall 242 partially along the periphery of the extending part 2410 of the base plate 241; the upper end face of the extending part 2410 forms a region for laser printing an unique product number or other product information; and the outer side surface of the outer side wall 242a is connected outward with two cable receiving troughs 246 having an inner diameter adapted to the outer diameter of the cables 1, and the cable receiving troughs 246 are symmetrical with respect to the longitudinal central line 4. The structure of the junction box body 2 of the junction box with cable connectors is defined in the embodiment, especially the cable receiving troughs 246 symmetrical with respect to the longitudinal central line 4 are provided in a manner of extending outward from the outer side surface of the outer side wall 242a, and as the inner diameter of the cable receiving troughs 246 is adapted to the outer diameter of cables in size in the embodiment, when the junction box with cable connectors is provided to the customer, the male and female cables are received in the cable receiving troughs 246, respectively, so that the cables 1 will not sway casually and are placed in a normalized and ordered manner suitable for packaging, not resulting in complicated packaging due to disordered winding of the cables; in addition, as the bottom surface of the base plate 241 is configured with a flat sector structure, and the shape is especially suitable for achieving the effect that after the adhesive is sprayed around the opening 245 of the base plate 241 through a robot by the customer, when the junction box is screwed and pressed on the solar panel or other plate walls, adhesive liquid on the base plate 241 of the junction box with cable connectors is perfectly distributed on the base plate, and is thereby fully used and not prone to fall off, thus further improving the reliability and stability, and relatively prolonging the service life.

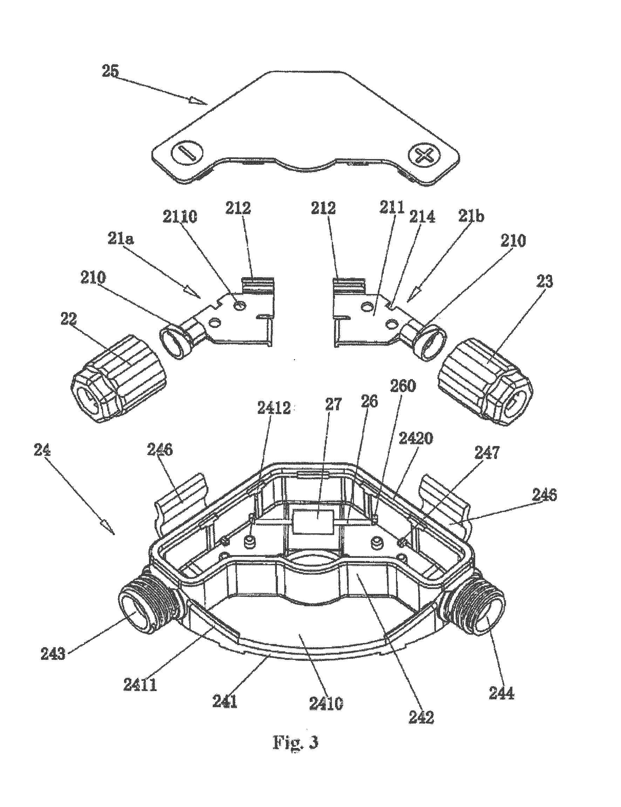

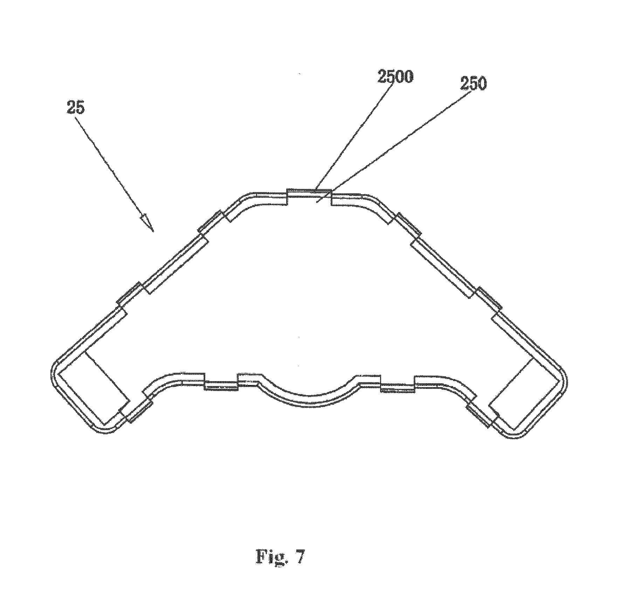

It can be seen obviously in conjunction with Figs. 3, 6, 7 and 10 that the bottom surface of the enveloping plate 25 is provided with a plurality of clamping blocks 250 at positions close to the peripheral side, and it can be seen from Fig. 7 of the embodiment that nine clamping blocks 250 are distributed at the peripheral side of the bottom surface of the enveloping plate 25, and the part of each clamping block 250 projecting from the peripheral side of the enveloping plate forms a clamping part 2500; and the upper end face of the side wall 242 is provided with a stepped groove 2420 adapted to the enveloping plate 25, and the stepped groove 2420 includes a stepped bottom surface 24200 and a stepped side surface 24201, the stepped bottom surface 24200 being provided with notches 2421 adapted to the clamping blocks 250, and the notches 2421 extending to the stepped side surface 24201 and forming clamping groove parts 24210 on the stepped side surface, so as to enable the clamping parts 2500 of the clamping blocks 250 to be in clamped connection with the clamping groove parts 24210 of the notches 2421. Obviously, in the embodiment, as clamping grooves on the side wall 242 are formed inside, clamped connection between the enveloping plate 25 and the bottom housing 24 is achieved without affecting the appearance, and the junction box can not be opened after assembly; and after the filling material is injected, as the enveloping plate 25 and the side wall 242 are connected to each other by means of adaptation through the stepped groove 2420, the sealing performance of the junction box 2 is relatively good. Of course, in practical use, it is also completely possible for the clamping blocks to be provided on the outer side surface of the side wall 242 and for the clamping grooves to be formed on the enveloping plate 25 in a manner of extending perpendicular to the enveloping plate 25, thereby achieving clamped connection; however, in such a connecting way, as the enveloping plate needs to be provided with clamping grooves, the structure of the enveloping plate is relatively complicated, and the mounting sealability of the enveloping plate and the casing is relatively poor after the filling material is injected. It can be seen obviously from Fig. 7, the upper end face of the enveloping plate 25 is provided with a nameplate region 255 and a sucker region 256 which are distributed longitudinally and are symmetrical with respect to the longitudinal central line 4, wherein the nameplate region 255 is located at an upper place on the upper end face of the enveloping plate 25, and the sucker region 256 is located below the nameplate region 255 on the upper end face of the enveloping plate 25; the dimension of the nameplate region 255 is preferably 7. 8mm × 28. 2mm, and the dimension of the sucker region is preferably 10mm × 30mm; and in the embodiment, it can be seen obviously the sucker region 256 can also be circular or elliptical. As the enveloping plate 25 and a junction box body of the junction box with cable connectors provided to the customer are separated from each other, and need to be assembled after the junction box with cable connectors is tested by the customer, with the sucker region 256 provided on the enveloping plate 25, the customer can more visually and conveniently use a mechanical arm for positioning and installation, thereby improving the efficiency; and the dimension of the sucker region of 10mm × 30mm is especially suitable for positioning by the mechanical arm of the customer and is also a special size for absorption by the mechanical arm.

It can be seen in conjunction with Figs 3, 4, 8 and 9 that the conductive boards 21a, 21b are provided with coupling portions 210 and fixed portions 211, wherein the coupling portions 210 are arranged at positions in the internal space close to the coupling holes 243, 244, and the coupling portions 210 are each provided with at least one clamping hole 2100 for clamping a cable; and in the embodiment, the coupling portion 210 has two clamping holes 2100 coaxially arranged, one of which is big and the other is small, so as to adapt to different cable ends. The fixed portion 211 is provided with at least two through holes 2110, and in the embodiment, two through holes 2110 are provided, and the through holes 2110 are adapted to and located relative to projections 2412 formed on the base plate 241; the conductive boards 21 a, 21b are provided with hanging portions 212 bent upward at 90° , at positions far from the coupling portions 210 and corresponding to pins 26 led from both ends of the diode 27 connected by way of special forming, and the hanging portions 212 are each provided with an arc-shaped transverse groove 2120, and the arc-shaped transverse groove 2120 is provided with a position limiting through hole 2121 at the end far from the longitudinal central line 4; and each pin 26 is provided at the end with a bent part 260, and the bending herein is for facilitating connection of the diode; the pin 26 is adapted to the arc-shaped transverse groove 2120 and limits the position of the diode 27 in such a way that the bent part 260 at the end of the pin 26 is adapted to the position limiting through hole 2121; and each fixed portion is provided with a conductivity testing region 2112 with an area not smaller than 10mm × 6mm, at a position close to the hanging portion, and the area is preferably 10mm × 6mm in the embodiment. In the embodiment, from the further defining of the conductive boards 21a, 21b in the internal space, it can be obviously seen that through hung connection between the hanging portions 212 of the conductive boards and the conductive rods 26 and the located connection between the through holes 2110 on the fixed portions 211 of the conductive boards and the projections 2412 provided on the base plate 241, the conductive boards are fixedly mounted at the positions in the internal space; and the conductivity testing regions 2112, the area of which is preferably 10mm × 6mm, provided at the positions close to the hanging portions 212 are especially suitable for testing by a mechanical arm.

It can be seen in conjunction with Figs. 4, 8 and 9 that the conductive boards 21a, 21b are provided with side through slots 214 at the sides adjacent to the inner side wall, and the side through slots 214 are adapted to position limiting blocks 247 on the side wall to achieve position limitation; the conductive boards 21 a, 21 b are provided with downward bent convex edges 213 at the sides close to the opening 245 of the base plate 241, and arc transitions are formed between the convex edges 213 and the upper end faces of the conductive boards 21a, 21b; at the periphery of the opening 245 of the base plate, are provided position limiting grooves 2450 adapted to the convex edges 213; at positions on the upper end faces of the fixed portions 211 of the conductive board 21a, 21b that are close to the convex edges 213, are provided spot welding regions 215 with an area not smaller than 10mm × 6mm, for spot welding external connecting attachments, such as copper strips, on the solar panel, to the conductive boards 2 1 a, 2 1 b through the opening 245, then testing the junction box 2, and then filling the junction box with glue to prevent any moisture from entering the junction box 2, and in the embodiment, the area of the spot welding area is preferably 10mm × 6mm; and the reason why the position limiting grooves 2450 adapted to the convex edges 213 are provided at the periphery of the opening 245 is that not only can the conductive boards 21a, 21b be further defined so that the conductive boards are positioned in the internal space more securely, but also additionally, due to the arc transitions between the convex edges 213 and the upper end faces of the fixed portions 211 of the conductive boards, it achieves, to some extent, the effect of less probability of hurting hands, causing flaws on the product and the like.

In summary, the assembly process of the junction box with cable connectors of the embodiment is substantially as follows: a manufacturer provides the components to the customer; and then the customer mounts the conductive boards into the junction box casing, and performs melting point fixation at the through holes of the conductive boards, then erects the junction box casing with the conductive boards mounted therein, puts in the diode and spot welds the diode to the hanging portions of the conductive boards, then performs testing in the conductivity testing regions of the conductive boards by a robot, after testing without fault, performs spot welding at the spot welding regions of the conductive boards by the robot to spot weld the external connecting attachments of the solar panel to the spot welding regions, then fills the junction box casing with glue, then sucks the enveloping plate at the sucker region of the enveloping plate by a mechanical arm, and after position alignment on the junction box casing, presses down to achieve clamped connection.

Apparently, the present invention is not limited to the protection scope of the above embodiment, and all improvements, such as providing reinforcing ribs on the junction box casing, or merely providing a partial shape, e.g. an opening, are obvious to those skilled in the art through working experience, reading materials or the like and fall into the protection scope of the present invention, as long as they are derived from the spirit of the present invention.

## Claims

1. A junction box with cable connectors, **characterized in** comprising a junction box body and male and female cables, the junction box body comprising a junction box casing, conductive boards, a first coupler and a second coupler, wherein the junction box casing comprises a bottom housing and an enveloping plate; the bottom housing comprises a base plate and a side wall which extends perpendicular to the base plate and is adapted to the peripheral shape of the enveloping plate; and the side wall and the enveloping plate define an internal space, wherein the side wall is provided with coupling holes which are symmetrical with respect to a longitudinal central line and extend outward perpendicular to the side wall; the first coupler and the second coupler are arranged on the coupling holes of the side wall by coupling with the coupling holes, respectively; the conductive boards are arranged inside the internal space, and are jointed with one ends of the cables passing through the first coupler and the second coupler, respectively; a diode is connected between the conductive boards; the base plate is provided with an opening; and the conductive boards are distributed at both sides of the opening.

2. The junction box with cable connectors according to claim 1, **characterized in that** the two coupling holes are provided, at the outer circumferential surfaces, with external threads which spin in opposite directions relative to each other; and the first coupler and the second coupler couple with the coupling holes by internal threads provided thereon, respectively.

3. The junction box with cable connectors according to claim 1 or 2, **characterized in that** a forming angle α is formed between axial central lines of the coupling holes, the forming angle α is between 75° and 125° , and the side wall is divided into an outer side wall and an inner side wall by the axial central lines forming the forming angle α; the bottom surface of the base plate is a flat surface with a sector structure having a double sided adhesive region, and the flat surface is provided with a plurality of pivots along its edge; the base plate is provided with an extending part within the angle range of the forming angle α, at a section projecting from the inner side wall, and with reinforcing ribs extending from the side wall partially along the periphery of the extending part; an upper end face of the extending part forms a region for laser printing an unique product number or other product information; and an outer side surface of the outer side wall is connected outward with two cable receiving troughs having an inner diameter adapted to the outer diameter of the cable, and the cable receiving troughs are symmetrical with respect to the longitudinal central line.

4. The junction box with cable connectors according to claim 1 or 2, **characterized in that** the bottom surface of the enveloping plate is provided with a plurality of clamping blocks projecting downward, at positions close to the peripheral side, and the part of each clamping block projecting from the peripheral edge of the enveloping plate forms a clamping part; and an upper end face of the side wall is provided with a stepped groove adapted to the enveloping plate, and the stepped groove includes a stepped bottom surface and a stepped side surface, the stepped bottom surface is provided with notches adapted to the clamping blocks, and the notches extend to the stepped side surface and form clamping groove parts on the stepped side surface, so as to enable the clamping parts of the clamping blocks to be in clamped connection with the clamping groove parts of the notches.

5. The junction box with cable connectors according to claim 4, **characterized in that** the upper end face of the enveloping plate is provided with a nameplate region and a sucker region which are distributed longitudinally and are symmetrical with respect to the longitudinal central line, wherein the nameplate region is located at an upper place on the upper end face of the enveloping plate, and the sucker region is located below the nameplate region on the upper end face of the enveloping plate; and the dimension of the nameplate region is 7.8mm × 28.2mm, and the dimension of the sucker region is 10mm × 30mm.

6. The junction box with cable connectors according to claim 1 or 2, **characterized in that** the conductive boards are provided with coupling portions and fixed portions, wherein the coupling portions are arranged at positions in the internal space close to the coupling holes, and the coupling portions are each provided with a cable clamping hole and a cable core clamping hole which are distributed axially; the fixed portions are each provided with at least two through holes, and the through holes are adapted to and located relative to projections formed on the base plate; the conductive boards are provided with hanging portions bent upward at 90° , at positions far from the coupling portions and corresponding to pins led from both ends of the diode, and the hanging portions are each provided with an arc-shaped transverse groove, and the arc-shaped transverse groove is provided with a position limiting through hole at the end far from the longitudinal central line; each pin is provided at the end with a bent part, and the pin is adapted to the arc-shaped transverse groove and longitudinally limits the position of the diode in such a way that the bent part at the end of the pin is adapted to the position limiting through hole; and each fixed portion is provided with a conductivity testing region with an area not smaller than 10mm × 6mm, at a position close to the hanging portion.

7. The junction box with cable connectors according to claim 6, **characterized in that** the conductive boards are provided with side through slots at the sides adjacent to the inner side wall, and the side through slots are adapted to position limiting blocks on the side wall to achieve position limitation; the conductive boards are provided with downward bent convex edges at the sides close to the opening of the base plate, and arc transitions are formed between the convex edges and the upper end faces of the conductive boards; at the periphery of the opening of the base plate, are provided position limiting grooves adapted to the convex edges; and at positions on the upper end faces of the fixed portions of the conductive boards that are close to the convex edges, are provided spot welding regions with an area not smaller than 10mm × 6mm.

8. The junction box with cable connectors according to claim 3, **characterized in that** the conductive boards are provided with coupling portions and fixed portions, wherein the coupling portions are arranged at positions in the internal space close to the coupling holes, and the coupling portions are each provided with a cable clamping hole and a cable core clamping hole which are distributed axially; the fixed portions are each provided with at least two through holes, and the through holes are adapted to and located relative to projections formed on the base plate; the conductive boards are provided with hanging portions bent upward at 90° , at positions far from the coupling portions and corresponding to pins led from both ends of the diode, and the hanging portions are each provided with an arc-shaped transverse groove, and the arc-shaped transverse groove is provided with a position limiting through hole at the end far from the longitudinal central line; each pin is provided at the end with a bent part, and the pin is adapted to the arc-shaped transverse groove and longitudinally limits the position of the diode in such a way that the bent part at the end of the pin is adapted to the position limiting through hole; and each fixed portion is provided with a conductivity testing region with an area not smaller than 10mm × 6mm, at a position close to the hanging portion.

9. The junction box with cable connectors according to claim 8, **characterized in that** the conductive boards are provided with side through slots at the sides adjacent to the inner side wall, and the side through slots are adapted to position limiting blocks on the side wall to achieve position limitation; the conductive boards are provided with downward bent convex edges at the sides close to the opening of the base plate, and arc transitions are formed between the convex edges and the upper end faces of the conductive boards; at the periphery of the opening of the base plate, are provided position limiting grooves adapted to the convex edges; and at positions on the upper end faces of the fixed portions of the conductive boards that are close to the convex edges, are provided spot welding regions with an area not smaller than 10mm × 6mm.

10. The junction box with cable connectors according to claim 3, **characterized in that** the internal space of the junction box is filled with a potting agent, such as silica gel, or foam.
